(19) **Europäisches Patentamt / European Patent Office / Office européen des brevets**

(11) **EP 2 526 408 B1**

(12) # FASCICULE DE BREVET EUROPEEN

(45) Date de publication et mention de la délivrance du brevet:
**19.03.2014 Bulletin 2014/12**

(21) Numéro de dépôt: **11703623.6**

(22) Date de dépôt: **18.01.2011**

(51) Int Cl.:
***G01N 21/65*** ^(2006.01)

(86) Numéro de dépôt international:
**PCT/EP2011/050622**

(87) Numéro de publication internationale:
**WO 2011/089119 (28.07.2011 Gazette 2011/30)**

(54) **METHODE POUR LA DETECTION D'UN SIGNAL OPTIQUE NON LINEAIRE RESONANT ET DISPOSITIF POUR LA MISE EN OEUVRE DE LADITE METHODE**

VERFAHREN ZUR ERKENNUNG EINES RESONANTEN NICHTLINEAREN OPTISCHEN SIGNALS UND VORRICHTUNG ZUR UMSETZUNG DIESES VERFAHRENS

METHOD FOR DETECTING A RESONANT NONLINEAR OPTICAL SIGNAL AND DEVICE FOR IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.01.2010 FR 1000244**

(43) Date de publication de la demande:
**28.11.2012 Bulletin 2012/48**

(73) Titulaire: **Centre National de la Recherche Scientifique CNRS**
**75794 Paris Cedex 16 (FR)**

(72) Inventeurs:
• **RIGNEAULT, Hervé**
  **F-13190 Allauch (FR)**
• **GACHET, David**
  **F-26760 Beaumont-les-Valence (FR)**
• **BRUSTLEIN, Sophie**
  **F-13006 Marseille (FR)**

(74) Mandataire: **Osha Liang SARL**
**32, avenue de l'Opéra**
**75002 Paris (FR)**

(56) Documents cités:
| | |
|---|---|
| EP-A2- 1 278 092 | EP-A2- 2 096 430 |
| WO-A1-2005/124322 | US-A- 5 042 952 |

• **GACHET D ET AL: "Coherent anti-Stokes Raman scattering (CARS) microscopy imaging at interfaces: evidence of interference effects", OPTICS EXPRESS OPTICAL SOCIETY OF AMERICA USA, vol. 15, no. 16, 6 août 2007 (2007-08-06), pages 10408-10420, XP002597885, ISSN: 1094-4087**
• **LIN JIAN ET AL: "Improved contrast radially polarized coherent anti-Stokes Raman scattering microscopy using annular aperture detection", APPLIED PHYSICS LETTERS, AIP, AMERICAN INSTITUTE OF PHYSICS, MELVILLE, NY, US LNKD- DOI:10.1063/1.3240874, vol. 95, no. 13, 1 octobre 2009 (2009-10-01), pages 133703-133703, XP012125904, ISSN: 0003-6951**
• **GACHET D ET AL: "Revisiting the Young's Double Slit Experiment for Background-Free Nonlinear Raman Spectroscopy and Microscopy", PHYSICAL REVIEW LETTERS AMERICAN PHYSICAL SOCIETY USA, vol. 104, no. 21, 28 mai 2010 (2010-05-28), XP002597886, ISSN: 0031-9007**

**EP 2 526 408 B1**

**Description**

**Domaine technique de l'invention**

La présente invention concerne une méthode pour la détection d'un signal optique non linéaire résonant et un dispositif pour la mise en oeuvre de ladite méthode. Elle s'applique notamment à la détection de la diffusion CARS.

**Etat de l'art**

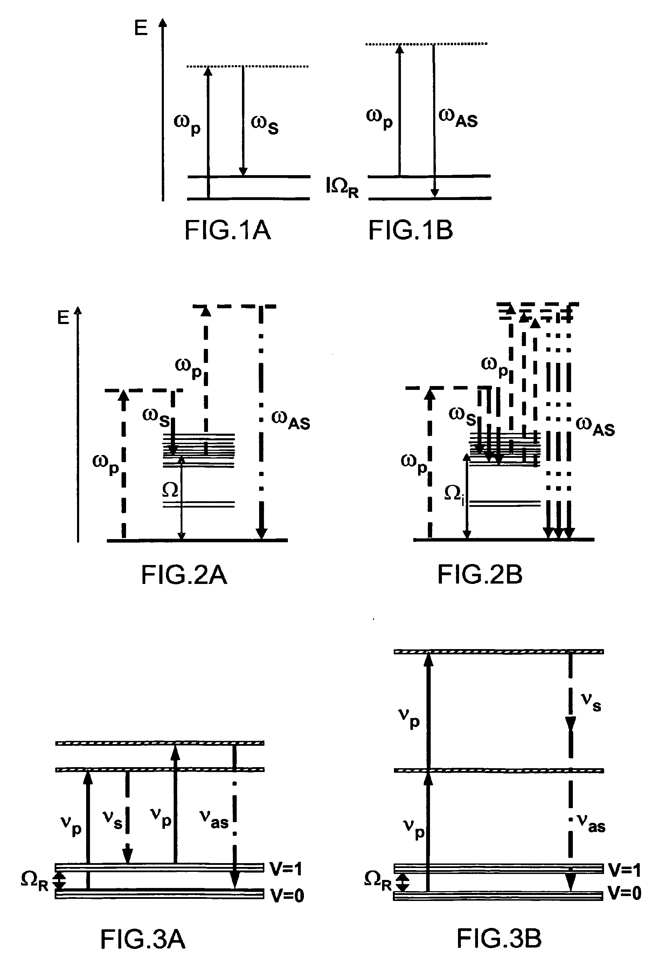

Toutes les liaisons chimiques possèdent des fréquences de vibration qui leur sont propres. On appelle techniques optiques vibrationnelles des méthodes qui visent à utiliser l'interaction lumière/matière pour obtenir des informations sur ces vibrations moléculaires. La plus connue de ces techniques est la spectroscopie infrarouge (IR) qui observe les raies d'absorption spécifiques des liaisons chimiques présentes dans un échantillon. Découverte en 1928, la diffusion Raman (du nom du physicien Chandrasekhara Venkata Raman qui découvrit l'effet) permet d'utiliser la lumière visible pour accéder au spectre vibrationnel des molécules qui interagissent avec un faisceau lumineux. Dans un processus de diffusion Raman, une onde pompe de pulsation $\omega_P$ incidente sur une molécule est diffusée inélastiquement en une onde dite Stokes de pulsation $\omega_S$ (Figure 1A) et une onde dite anti-Stokes de pulsation $\omega_{AS}$ (Figure 1B). L'écart en fréquence entre les ondes générées et l'onde pompe dépend de la transition Raman moléculaire (de pulsation $\Omega_R$) de telle sorte que ($\omega_P$-$\omega_S$=$\omega_{AS}$-$\omega_P$.=$\Omega_R$. Dans une vision photonique du processus, les ondes Stokes et anti-Stokes correspondent à une absorption à partir respectivement du niveau vibrationnel fondamental ou excité. Le processus générant l'onde anti-Stokes, partant du niveau vibrationnel excité, est beaucoup moins probable que le processus créant l'onde Stokes, qui est la seule observée dans la pratique en spectroscopie Raman spontanée. Une étude fine de la répartition spectrale des ondes Stokes renseigne sur les densités de liaisons chimiques présentes dans l'échantillon. Ce processus spontané de diffusion inélastique est très peu efficace comparé à la fluorescence (les sections efficaces Raman sont de l'ordre de $10^{-30}$ cm /molécule, à comparer avec la section efficace d'absorption à 1 photon d'un fluorophore qui atteint $10^{16}$ cm$^2$/molécule).

La spectroscopie Raman stimulée CARS (pour Coherent Anti-Stokes Raman Scattering) est un processus de mélange à quatre ondes qui permet d'adresser les liaisons vibrationnelles présentes dans un échantillon. Ce processus est par exemple décrit dans R.W. Boyd, Nonlinear Optics (Academic Press, Boston, 1992). Il s'agit d'envoyer deux impulsions laser de pulsations $\omega_p$ et $\omega_s$ (ou de fréquences $\nu_p$ et $\nu_s$ dont la différence de pulsations est rendue égale à la pulsation $\Omega$ du niveau vibrationnel que l'on veut adresser. Dans cette configuration de résonance $\omega_p$ -$\omega_s$ = S2, le niveau vibrationnel de pulsation $\Omega$ est peuplé de manière stimulée et va pouvoir diffuser inélastiquement le faisceau de pulsation $\omega_p$ dans un faisceau de pulsation $\omega_{as}$ = 2 $\omega_p$-$\omega_s$ (Figure 2A). La présence de cette nouvelle radiation $\omega_{as}$ (appelée dans la suite de la description « signal diffusé CARS ») est la signature de la présence de la liaison vibrant à la pulsation $\Omega$ dans l'échantillon. Une première mise en oeuvre de CARS consiste à envoyer sur l'échantillon deux impulsions picoseconde fines spectralement dont la différence de pulsations n'adressera qu'une liaison vibrationnelle spécifique. Pour une identification optimale, on recherche l'ensemble des liaisons vibrationnelles présentes dans l'échantillon. Pour cela, on opère en mode dit « Multiplex CARS » (voir par exemple M. Muller et J. Schins, « Imaging the thermodynamic state of lipidic membranes with multiplex CARS spectroscopy », Physical Chimistry B 106, 3715-3723 (2002) ) où l'on envoie sur l'échantillon une impulsion $\omega_p$ fine spectralement et une impulsion $\omega_s$ large spectralement (Figure 2B). On peut ainsi adresser l'ensemble des niveaux vibrationnels $\Omega_i$ présents dans l'échantillon et obtenir un spectre du signal $\omega_{as}$ généré. Du point de vue technique, le spectre étroit est par exemple issu d'un laser picoseconde et le spectre large, par exemple d'un laser femtoseconde, ou d'une fibre à cristal photonique générant un supercontinuum (SC).

Sur la figure 3A, nous décrivons le processus de diffusion CARS résonant, exploité pour avoir accès à la signature des espèces moléculaires que l'on cherche à identifier. Il existe cependant une contribution CARS non résonante, représentée sur la figure 3B, qui provient d'une contribution électronique de l'échantillon. Cette contribution non résonante peut être importante lorsqu'on fait de la spectroscopie CARS sur un échantillon comportant une grande diversité de liaisons chimiques.

La demande de brevet US 6,809,814 au nom de Xie et al. décrit la détection d'un signal CARS dans un échantillon microscopique, basée sur une détection arrière (epi) du signal CARS, permettant de s'affranchir du bruit non résonant des objets de taille comparable aux longueurs d'onde des sources d'excitation. En particulier, ce mode de détection permet de visualiser des objets de taille sub-longueur d'onde (organelles par exemple) et de supprimer le bruit de fond non résonant du solvant qui entoure généralement les échantillons biologiques. Cette détection présente cependant l'inconvénient de ne pas supprimer le bruit de fond non résonant intrinsèque de ces objets sub-longueur d'onde.

Une autre technique de détection du signal CARS permettant de s'affranchir de la contribution non résonante est décrite dans la demande de brevet WO 2005/124322 au nom de Potma et al. Le bruit de fond non résonant CARS est supprimé en utilisant un oscillateur local et en réalisant une détection hétérodyne. Pratiquement il s'agit de générer le signal CARS dans un échantillon annexe (dans un solvant ou une fibre optique par exemple) et de le recombiner au signal CARS généré par l'échantillon d'intérêt dans le microscope tout en contrôlant sa phase. Ce contrôle de la phase demande un montage interférométrique difficile à stabiliser. Dans la pratique, cette méthode en est restée au stade de la démonstration de Laboratoire.

Dans la demande de brevet WO2008135257 au nom de Rimke et al., le schéma de détection hétérodyne reporté dans la demande WO 2005/124322 cité ci-dessus est appliqué et la source laser utilisée est composé d'un laser picoseconde émettant à 1064 nm et doublé à 532 nm. Le faisceau à 532 nm vient par la suite pomper un oscillateur paramétrique optique (OPO). L'OPO génère deux longueurs d'onde « signal » $\lambda_{signal}$ et « idler » $\lambda_{idler}$ accordables selon $1/\lambda_{signal}(nm)+\lambda_{idler}(nm)1/532(nm)$. Les faisceaux à 1064 nm et idler jouent alors respectivement les rôles de faisceaux pompe et Stokes. Le faisceau signal est lui à la même longueur d'onde que le faisceau anti-Stokes généré dans l'échantillon. Il est recombiné avec le faisceau anti-Stokes et le signal résultant de cette interférence est détecté selon le procédé d'interférométrie hétérodyne décrit dans la demande WO 2005/124322. Cette technique très efficace nécessite l'utilisation d'un OPO pouvant générer les deux longueurs d'onde signal et idler.

Une autre technique de détection du signal CARS permettant de s'affranchir de la contribution non résonante est décrite dans la demande de brevet US 7,352,458 au nom de Xie et al. Le bruit de fond non résonant CARS est supprimé en modulant rapidement (à la fréquence v) la longueur d'onde anti-Stokes d'observation. En pratique, l'un des deux faisceaux (pompe ou Stokes) est délivré par une source laser délivrant deux longueurs d'onde et l'autre faisceau est généré par une source laser à une seule longueur d'onde. La modulation rapide entre les deux longueurs d'onde délivrées par la première source permet de moduler à la même fréquence l'excitation résonante et non-résonante du signal CARS. Le bruit non-résonant du signal CARS est alors supprimé en démodulant le signal CARS à la fréquence v. En pratique, cette méthode nécessite une source émettant deux longueurs d'onde et un bon contraste entre les signaux résonant et non-résonants entre lesquels la modulation opère.

Une autre technique de détection du signal CARS permettant de s'affranchir de la contribution non résonante est décrite dans la demande de brevet US 6,789,507 au nom de Xie et Cheng. Elle joue sur les propriétés de polarisation différentes des signaux résonant et non-résonant. Il est connu en spectroscopie Raman spontanée qu'une résonance vibrationnelle dépolarise le faisceau d'excitation. En pratique, le faisceau diffusé est dépolarisé par rapport au faisceau d'excitation. Cet effet de dépolarisation est quantifié par un « coefficient de dépolarisation » propre à chaque résonance vibrationnelle. Appliqué à la diffusion CARS, l'effet est utilisé comme suit: un angle est introduit entre les polarisations linéaires des faisceaux d'excitation pompe et Stokes. Les signaux CARS résonant et non-résonant sont alors générés selon des polarisations différentes. Un polariseur est alors introduit après l'échantillon pour éteindre le signal non-résonant et laisser passer la fraction de signal résonant non éteinte. Cette méthode est simple à mettre en oeuvre mais diminue de manière drastique le niveau de signal résonant détecté. Cette réduction est d'autant plus forte que le « coefficient de dépolarisation » de la résonance Raman sondée est proche de 1/3.

L'article de Gachet et al. "Coherent anti-Stokes Raman scattering (CARS) microscopy imaging at interfaces: evidence of interference effects",Optics Express, vol. 15, no. 16, 6 août 2007, pages 10408-10420, concerne la détection d'un signal non-linéaire résonant (CARS) dans un échantillon comprenant un milieu résonant et un milieu non résonant formant une interface. Cet article divulgue le déphasement à la résonance du signal CARS, et son effet sur le contraste de l'image CARS à l'interface.

La présente invention propose une méthode originale de détection d'un signal optique non linéaire résonant, simple à mettre en oeuvre, compatible avec une imagerie rapide, et permettant notamment de s'affranchir du bruit CARS non résonant dans des applications d'imagerie microscopique ou de spectroscopie. Cette méthode est basée sur l'analyse de la direction de diffusion du signal CARS à l'interface axiale d'un milieu résonant et non résonant, et plus précisément sur l'analyse de la déviation angulaire du signal.

RESUME DE L'INVENTION

Selon un premier aspect, l'invention concerne un dispositif pour la détection d'un signal optique non linéaire résonant induit dans un échantillon de type comprenant un milieu résonant et un milieu non résonant formant une interface. Le dispositif selon le premier aspect comprend une source d'émission d'au moins un premier faisceau lumineux d'excitation, dit faisceau pompe, à une première pulsation $\omega_p$ donnée, adapté à l'excitation du milieu résonant d'un échantillon du type donné, un module de détection optique adapté à la détection d'un signal optique non linéaire résultant de l'interaction dudit faisceau pompe avec une interface axiale entre les milieux résonant et non résonant de l'échantillon, dans au moins deux directions symétriques par rapport à l'axe optique dudit faisceau pompe incident dans l'échantillon, et une unité de traitement adaptée au traitement des signaux ainsi détectés permettant d'obtenir la différence desdits signaux, le signal de différence résultant étant caractéristique d'une résonance vibrationnelle ou électronique du milieu résonant de l'échantillon. Le dispositif ainsi décrit permet d'analyser la déviation angulaire du signal optique non linéaire résultant de l'interaction du ou desdits faisceaux avec l'échantillon, permettant d'obtenir à une interface axiale des milieux résonant et non résonant un signal caractéristique d'une résonance vibrationnelle ou électronique du milieu résonant.

Selon une variante, la source d'émission permet l'émission d'un faisceau pompe de pulsation $\omega$p et d'un faisceau Stokes de pulsation $\omega$s, le signal optique non linéaire résultant de l'interaction desdits faisceaux pompe et Stokes est un signal dit signal diffusé CARS, de pulsation $\omega$as = 2$\omega$p - $\omega$s et le signal résultant de l'analyse de la direction d'émission du signal diffusé CARS, un signal caractéristique d'une émission Raman du milieu résonant.

Selon une variante, le module de détection optique comprend au moins un masque d'occultation et au moins un détecteur, permettant de détecter le signal optique non linéaire intégré dans deux demi-espaces complémentaires, symétriques par rapport à l'axe optique, la différence étant effectuée sur les signaux intégrés dans les deux demi-espaces.

Selon une autre variante, le module de détection optique comprend un système d'enregistrement d'images permettant de détecter point à point le signal optique non linéaire collecté dans des directions symétriques par rapport à l'axe optique, la différence étant effectuée pour chaque couple de signaux ainsi détectés

Selon une autre variante, le module de détection optique dudit signal optique non linéaire comprend un masque en rotation autour de l'axe optique à une fréquence (v) donnée, le masque occultant partiellement ledit signal, et un détecteur permettant de détecter le signal optique intégré dans la partie de l'espace non occultée par le masque pour délivrer un signal modulé à ladite fréquence de rotation du masque et présentant une valeur maximale et une valeur minimale, et l'une unité de traitement permet le traitement du signal modulé afin d'obtenir l'amplitude de la composante fréquentielle du signal à ladite fréquence de rotation du masque, l'amplitude étant proportionnelle à la différence entre lesdites valeurs maximale et minimale et étant caractéristique d'une résonance vibrationnelle ou électronique du milieu résonant.

Selon une variante, le dispositif comprend en outre un dispositif de balayage angulaire du ou des faisceaux d'excitation, permettant au ou à les faisceaux d'excitation d'intercepter l'échantillon à différentes positions de l'interface entre le milieu résonant et non résonant.

Selon une variante, la source d'émission émet au moins un faisceau d'excitation à longueur d'onde variable, permettant d'obtenir un spectre des résonances vibrationnelles ou électroniques du milieu résonant.

Selon un deuxième aspect, l'invention concerne une méthode pour la détection d'un signal optique non linéaire résonant induit dans un échantillon, l'échantillon comprenant un milieu résonant et un milieu non résonant formant une interface, la méthode comprenant : l'émission d'au moins un premier faisceau lumineux d'excitation du milieu résonant, dit faisceau pompe, à une première pulsation $\omega_p$ donnée, ledit faisceau pompe étant incident sur l'échantillon selon un axe optique, et interceptant ladite interface entre le milieu résonant et le milieu non résonant, la détection du signal optique non linéaire résultant de l'interaction du ou desdits faisceaux d'excitation avec une interface axiale entre les milieux résonant et non résonant de l'échantillon, dans au moins deux directions symétriques par rapport à l'axe optique, et le traitement des signaux ainsi détectés permettant d'obtenir la différence desdits signaux, le signal de différence résultant étant caractéristique d'une résonance vibrationnelle ou électronique du milieu résonant de l'échantillon.

Selon une variante, la méthode comprend l'émission d'un faisceau pompe de pulsation $\omega$p et d'un faisceau Stokes de pulsation $\omega$s, le signal optique non linéaire résultant de l'interaction desdits faisceaux pompe et Stokes étant un signal dit signal diffusé CARS, de pulsation $\omega$as = 2$\omega$p - $\omega$s et le signal résultant de l'analyse de la direction d'émission du signal diffusé CARS, un signal caractéristique d'une émission Raman du milieu résonant.

Selon une variante, la détection du signal optique non linéaire est faite par intégration du signal dans deux demi-espaces complémentaires, symétriques par rapport à l'axe optique, et le traitement comprend le calcul de la différence entre les signaux intégrés dans les deux demi-espaces.

Selon une autre variante, la détection du signal optique non linéaire est faite par détection point à point du signal optique non linéaire dans des directions symétriques par rapport à l'axe optique, et le traitement comprend le calcul de la différence entre les signaux de chaque couple de signaux ainsi détectés.

Selon une autre variante, la détection du signal optique non linéaire comprend l'occultation partielle dudit signal optique non linéaire au moyen d'un masque en rotation autour de l'axe optique à une fréquence (v) donnée et la détection du signal optique intégré dans la partie de l'espace non occultée par le masque pour délivrer un signal modulé à ladite fréquence de rotation du masque présentant une valeur maximale et une valeur minimale et le traitement comprend la détermination de l'amplitude de la composante fréquentielle à ladite fréquence de rotation du masque dudit signal modulé, l'amplitude étant proportionnelle à la différence entre lesdites valeurs maximale et minimale du signal modulé et étant caractéristique d'une résonance vibrationnelle ou électronique du milieu résonant.

Selon une variante, le ou les faisceaux d'excitation subissent un balayage angulaire pour intercepter l'échantillon à différentes positions de l'interface entre le milieu résonant et non résonant.

Selon une variante, l'un au moins des faisceaux d'excitation présente une longueur d'onde d'émission variable, permettant d'obtenir un spectre des résonances vibrationnelles ou électroniques du milieu résonant.

BREVE DESCRIPTION DES DESSINS

D'autres avantages et caractéristiques de l'invention apparaîtront à la lecture de la description, illustrée par les figures suivantes :

Figures 1A et 1B (déjà décrites), principe de l'émission Stokes et anti-Stokes dans un processus de diffusion Raman;

Figure 2A et 2B (déjà décrites), principe de la diffusion CARS dans deux modes différents ;

Figures 3A et 3B (déjà décrites), illustrations des processus CARS résonant et non résonant ;

Figure 4, schéma des conditions géométriques pour la mise en oeuvre de la diffusion CARS à l'interface de milieux résonant et non résonant ;

Figures 5A à 5E, illustration de la déviation du signal diffusé CARS en fonction de la position relative du lieu de focalisation des faisceaux d'excitation avec l'interface entre des milieux résonant et non résonant ;

Figure 6, schéma illustrant le montage expérimental des fentes d'Young ;

Figure 7, courbe obtenue par simulation numérique, illustrant la déviation du signal diffusé CARS en fonction du paramètre, $\zeta=(\omega p-\omega s-\Omega R)/\Gamma$ (décalage normalisé à la résonance Raman);

Figures 8A et 8B, courbes obtenues par simulation numérique, montrant les intensités lumineuses calculées respectivement dans l'espace des ($k_x>0$) et ($k_x<0$) et la différence des intensités, en fonction du paramètre $\zeta$ (figure 8A) et de la position x du lieu de focalisation des faisceaux d'excitation par rapport à l'interface (figure 8B) ;

Figures 9A à 9C, schémas illustrant 3 modes possibles pour la mise en oeuvre de la détection CARS ;

Figure 10, schéma illustrant un dispositif pour la mise en oeuvre de la détection de la diffusion CARS, selon un exemple de réalisation de l'invention ;

Figure 11, courbe expérimentale obtenue avec le schéma de la figure 10, représentant l'intensité de la diffusion CARS en fonction du décalage Raman, pour une bille de polystyrène (diamètre 20 $\mu$m, immergée dans un liquide aqueux d'indice de réfraction n=1. 56);

Figure 12, schéma illustrant un dispositif pour la mise en oeuvre de la détection de la diffusion CARS, selon un autre exemple de réalisation de l'invention ;

Figures 13A à 13C, schéma illustrant un dispositif pour la mise en oeuvre de la détection de la diffusion CARS, selon un autre exemple de réalisation de l'invention ;

Figures 14A et 14B, schémas illustrant le signal mesuré dans les conditions expérimentales de la figure 13A, hors résonance ;

Figures 15A et 15B, schémas illustrant le signal mesuré dans les conditions expérimentales de la figure 13A, à la résonance ;

Figure 16, schéma montrant la détermination de l'orientation de l'interface et la position relative des milieux résonant et non résonant au moyen du dispositif selon la figure 13A.

DESCRIPTION DETAILLEE

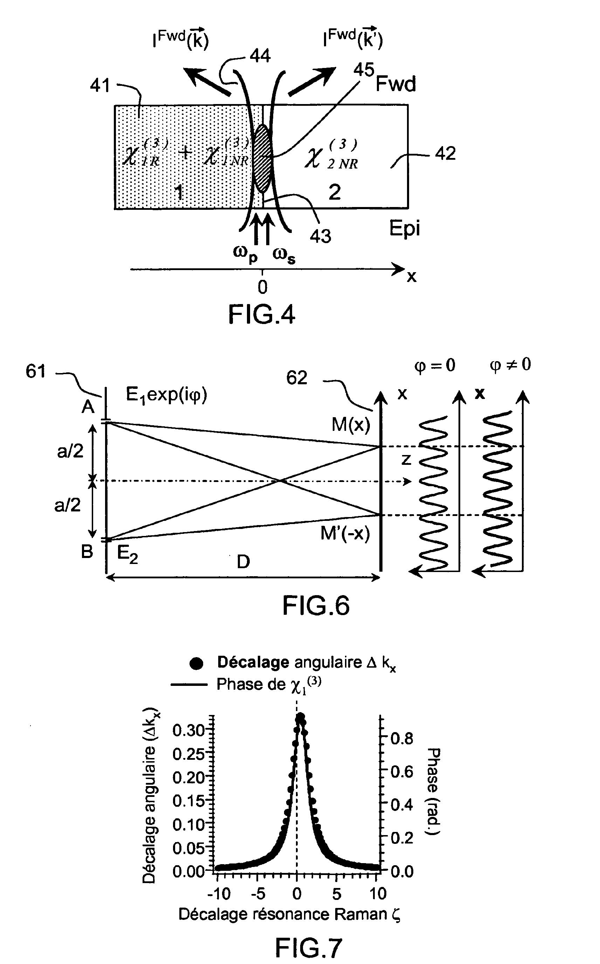

La figure 4 représente un échantillon comprenant un milieu résonant 41, par exemple un milieu contenant le milieu à analyser, c'est-à-dire le milieu d'intérêt biologique, et un milieu non résonant 42, typiquement un milieu contenant le solvant. La susceptibilité non linéaire du 3ème (3) ordre est définie dans le milieu résonant 41 par un terme résonant $\chi^{(3)}_{1R}$ et un terme non résonant $\chi^{(3)}_{1NR}$. Dans le milieu non résonant 42, elle est définie par le terme non résonant $\chi^{(3)}_{2NR}$. Selon un aspect de la méthode de détection, l'invention consiste à analyser spatialement le signal diffusé par processus CARS, référencé 44 sur la figure 4, résultant de l'interaction d'un faisceau pompe de pulsation $\omega_p$ et d'un faisceau sonde de pulsation $\omega_s$, colinéaires, incidents sur l'échantillon dans un volume de focalisation 45, avec une interface axiale de l'échantillon, c'est-à-dire présentant une composante non nulle selon l'axe des faisceaux pompe et Stokes incidents. Plus précisément, comme cela est expliqué en détail par la suite, la méthode consiste à analyser l'intensité lumineuse du faisceau optique non linéaire dans l'espace des vecteurs d'onde $\overline{k}$, c'est-à-dire dans l'espace des directions d'émission du signal émis par processus CARS, de part et d'autre de l'interface, cette intensité étant notée sur la figure 4 respectivement $I^{Fwd}(\overline{k})$ et $I^{Fwd}(\overline{k}')$ de part et d'autre de l'interface. Dans la suite de la description, l'abréviation « Fwd » représentant le signal CARS diffusé vers l'avant, par opposition au signal dit « Epi », diffusé vers l'arrière.

En effet, la déposante a démontré expérimentalement et théoriquement qu'à une interface axiale, le signal émis par processus CARS subit une déviation angulaire à la résonance.

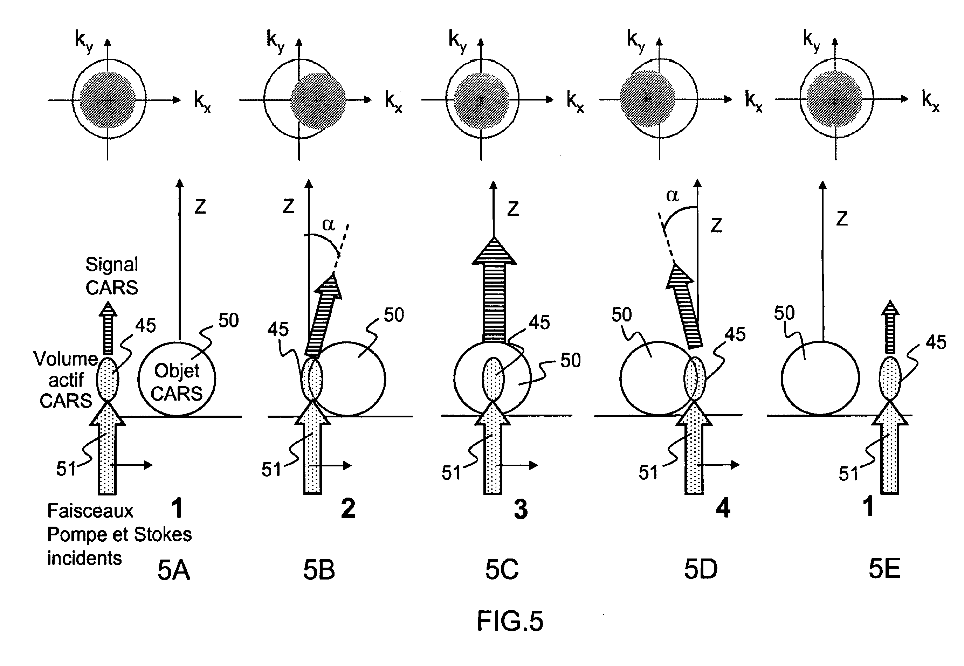

Les figures 5A à 5E représentent par une série de schémas la déviation du signal diffusé CARS en fonction de la position relative des faisceaux pompe et Stokes incidents avec l'interface. Sur les figues 5A à 5E est représenté le volume actif CARS 45 (lieu de focalisation des faisceaux pompe et Stokes) qui est déplacé à travers un objet CARS 50 (chaque vignette correspond à une position différente du volume actif dans l'objet). L'objet CARS est considéré comme résonant alors que le milieu entourant l'objet est considéré comme non résonant (il sera appelé dans la suite de la description « le solvant »). Il apparaît qu'aux interfaces axiales entre l'objet CARS et le solvant, le signal diffusé CARS est affecté d'une déviation (ou tilt). La déposante a démontré, comme cela sera expliqué dans la suite, que cette déviation relève d'un processus purement interférentiel entre l'objet CARS et le solvant et n'est en aucun cas imputable aux effets réfractifs. Sur les deux vignettes 1 (figures 5A et 5E), le volume CARS est focalisé dans le solvant et le signal diffusé CARS est émis dans la direction normale (parallèle à l'axe d'incidence des faisceaux pompe et Stokes, symbolisé par la flèche 51); sur la vignette 2 (figure 5B), le volume CARS est focalisé sur l'interface entre l'objet CARS et le solvant, le signal diffusé CARS est alors émis avec un angle $\alpha$ positif (par rapport à l'axe d'incidence des faisceaux pompe et Stokes), déviant ainsi le faisceau dans une direction défmie par ($k_x>0$) dans l'espace des vecteurs d'onde $\overline{k}$. Sur la vignette 3 (figure 5C), le volume CARS est centré dans l'objet CARS, le signal CARS est alors intense et est dirigé dans la direction normale (parallèle à l'axe d'incidence des faisceaux pompe et Stokes). On retrouve ensuite une situation similaire sur les vignettes suivantes (vignette 4, figure 5D et vignette 1, figure 5E); il est cependant important de noter que sur la vignette 4, $\alpha$ est négatif et correspond à une déviation dans une direction définie par ($k_x<0$). La déposante a démontré à la fois théoriquement et expérimentalement, que l'évolution de l'angle $\alpha$ en fonction du paramètre normalisé $\zeta=(\omega_p-\omega_s-\Omega_R)/\Gamma$ (où $\Gamma$ est la largeur spectrale de la raie vibrationnelle étudiée), suit la phase du tenseur $\chi^{(3)}_1 = \chi^{(3)}_{1R} + \chi^{(3)}_{1NR}$ décrivant le milieu 1. La déposante a également démontré qu'il est possible en analysant dans des directions de diffusion symétriques par rapport à l'axe optique des faisceaux incidents le signal CARS diffusé, par exemple en faisant la différence entre les énergies des signaux CARS émis dans les demi-espaces complémentaires définis par ($k_x>0$) et ($k_x<0$), de déterminer le spectre Raman pur du milieu 1.

La déposante a démontré que cette constatation expérimentale pouvait s'expliquer par un modèle simple basé sur la théorie des fentes d'Young. La figure 6 représente le montage expérimental des fentes d'Young. Dans l'expérience de Young, une source lumineuse S monochromatique (non représentée sur la figure 6) illumine une plaque 61 percée de deux fentes (notées A et B). Celles-ci se comportent comme des sources lumineuses secondaires d'amplitude E1 et E2. On observe alors, sur un écran 62 placé à une distance D de la plaque 61, des franges alternativement sombres et claires, résultant de l'interférence des ondes issues de A et B. L'intensité lumineuse mesurée en un point M(x) de l'écran 62 s'écrit :

$$I(x) = |E_1|^2 + |E_2|^2 + 2|E_1||E_2|\cos\left(\frac{2\pi x}{\lambda D}\right)$$

Si on suppose qu'une des sources secondaires présente un déphasage $\varphi$ par rapport à l'autre, l'intensité I(x) mesurée en M(x) s'écrit :

$$I(x) = |E_1|^2 + |E_2|^2 + 2|E_1||E_2|\cos\left(\frac{2\pi x}{\lambda D} + \varphi\right)$$

Il en résulte que la différence d'intensité $\Delta I(x) = I(x) - I(-x)$ obtenue par la différence d'intensités mesurée en deux points M(x) et M'(-x) symétriques par rapport à l'axe de symétrie des fentes s'écrit :

$$\Delta I(x) = 4|E_1||E_2|\sin\left(\frac{2\pi x}{\lambda D}\right)\sin(\varphi)$$

La déposante a démontré que par analogie, on pouvait dériver de la théorie des fentes d'Young une expression de la différence $\Delta I(\overline{k})$ des intensités $I^{Fwd}(\overline{k})$ et $I^{Fwd}(\overline{k'})$ mesurée selon deux directions $\overline{k}$ et $\overline{k'}$ symétriques par rapport à l'axe d'incidence des faisceaux pompe et Stokes (figure 4) :

$$\Delta I(\vec{k}) = I^{Fwd}(\vec{k'}) - I^{Fwd}(\vec{k}) \propto 4\left|\chi_1^{(3)}\right|\chi_2^{(3)} \sin(\varphi)$$

Ici, le déphasage $\varphi$ a pour origine la signature d'une vibration moléculaire du milieu résonant. Il résulte de cette expression que la différence $\Delta I(\overline{k})$ est proportionnelle à la partie imaginaire de la susceptibilité non linéaire d'ordre 3 du milieu résonant, c'est-à-dire du spectre Raman pur du milieu 1.

La figure 7 présente les résultats d'un calcul numérique rigoureux prenant en compte la nature vectorielle des faisceaux pompe et Stokes focalisés sur une interface axiale entre un milieu 1 résonant et un milieu 2 non résonant (figure 4). L'analyse consiste à étudier dans l'espace des vecteurs d'onde $\overline{k}$ le décalage angulaire du signal diffusé CARS émis en fonction du paramètre de décalage normalisé à la résonance Raman $\zeta = (\omega_p - \omega_s - \Omega_R)/\tilde{\Gamma}$. Hors résonance ($\zeta = -10$), le faisceau est centré tandis qu'à la résonance ($\zeta = 0$), il apparaît clairement un décalage.

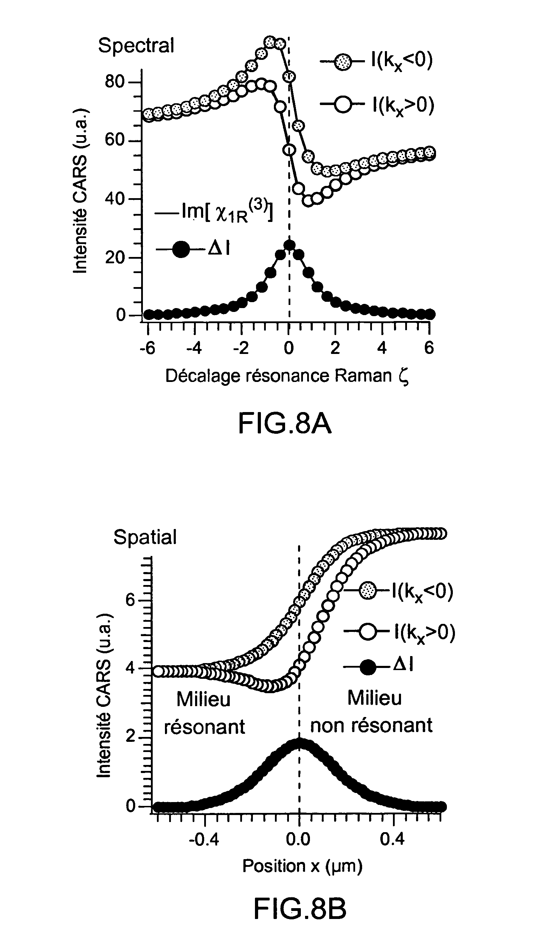

Sur la figure 8A sont représentés les spectres CARS intégrés sur les demi-espaces ($k_x > 0$) et ($k_x < 0$) lorsque les faisceaux pompe et Stokes sont focalisés sur l'interface ($x = 0$), ainsi que leur différence $\Delta I$. Cette différence suit exactement le spectre Raman donné par $Im[\chi^{(3)}_{1R}]$. Ceci démontre la pertinence de cette approche pour une spectroscopie CARS sans bruit non résonant. Il est ainsi par exemple possible, en faisant varier la fréquence du faisceau Stokes, de déterminer le spectre Raman du milieu résonant.

Sur la figure 8B, sont représentés les signaux CARS intégrés sur les demi-espaces ($k_x > 0$) et ($k_x < 0$) en fonction du lieu de focalisation des faisceaux pompe et Stokes par rapport à l'interface. Leur différence est non nulle uniquement au voisinage de l'interface ($x = 0$). Une imagerie CARS sans bruit de fond non résonant peut ainsi être obtenue au voisinage de l'interface.

Cette nouvelle approche qui fait la différence des signaux CARS dans l'espace des k, est dénommée par la suite Dk-CARS pour (Differential imaging in K-space).

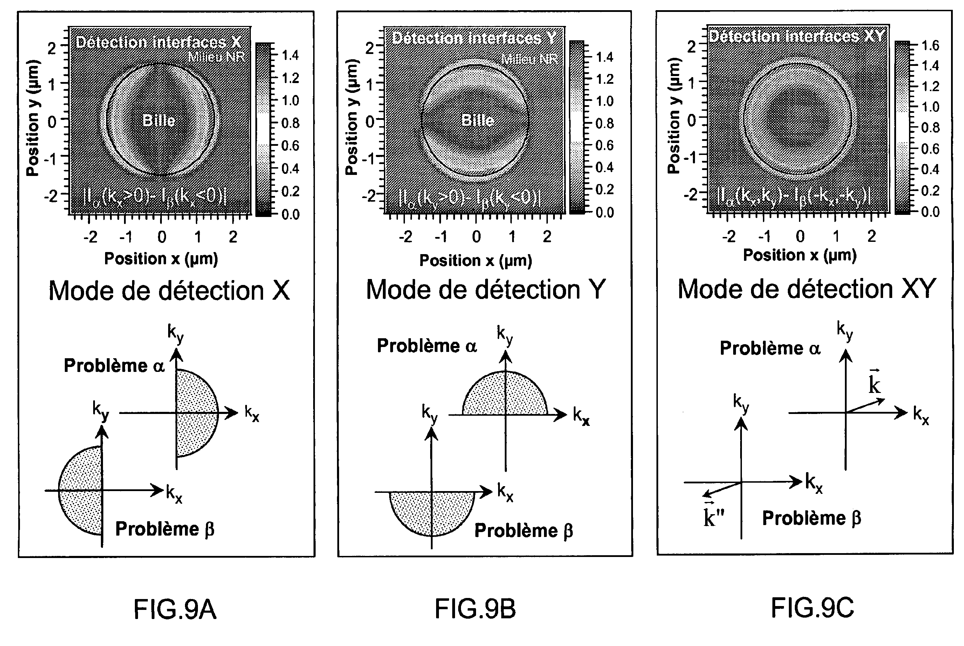

Les figures 9A à 9C présentent 3 modes de détection possibles pour la microscopie Dk-CARS. Pour chaque mode de détection une simulation numérique représente l'image obtenue pour une bille de 3 $\mu$m de diamètre dans un solvant de type aqueux (longueur d'onde pompe 730 nm, longueur d'onde Stokes 787 nm, ouverture numérique de l'objectif d'excitation 1.2 dans l'eau, ouverture numérique de l'objectif de collection 0.5 dans l'air). L'image est calculée dans chacun des cas dans un plan XY correspondant au plan équatorial de la bille, perpendiculaire à la direction d'incidence Z (voir figure 5) des faisceaux d'excitation. La figure 9A représente le mode de détection X permettant une détection aux interfaces perpendiculaires à l'axe X. Dans l'exemple de la figure 9A, on calcule la différence des intensités lumineuses intégrées dans l'espace ($k_x > 0$) (problème $\alpha$, Figure 9A) et dans l'espace ($k_x < 0$) (problème $\beta$, Figure 9A). En modifiant la position relative du lieu de focalisation des faisceaux pompe et Stokes, on obtient l'image de la Figure 9A. La figure 9B représente le mode de détection Y permettant une détection aux interfaces perpendiculaires à l'axe Y. Dans cet exemple, on calcule pour différentes positions la différence des intensités lumineuses intégrées dans l'espace ($k_y > 0$) (problème $\alpha$, Figure 9B) et dans l'espace ($k_y < 0$) (problème $\beta$, Figure 9B). La figure 9C représente le mode de détection XY. L'image est calculée en faisant la différence deux à deux des intensités lumineuses $I_\alpha(k_x, k_y)$ et $I\beta(-k_x, -_ky)$ mesurées dans deux directions $\overline{k}$ ($k_x, k_y, k_z$) et $\overline{k''}$ ($-k_x, -k_y, k_z$) opposées, correspondant respectivement aux problèmes $\alpha$ et $\beta$ sur la Figure 9C, les directions étant contenues dans le cône angulaire dont l'angle d'ouverture est défini par l'ouverture numérique de collection du signal diffusé CARS (par exemple 0.5 dans l'air). Dans ce dernier mode de détection, toutes les interfaces sont visibles dans un plan équatorial de la bille.

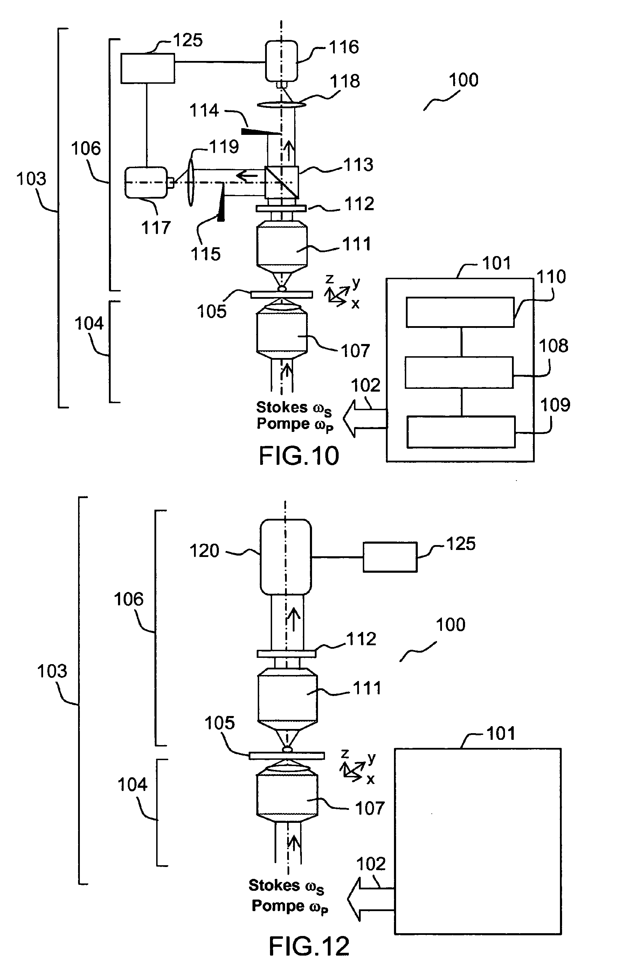

La figure 10 représente un premier exemple de mise en oeuvre expérimentale de Dk-CARS, adapté par exemple pour les modes de détection des figures 9A ou 9B, pour l'étude d'un échantillon comprenant une interface entre un milieu résonant et un milieu non résonant. Le dispositif de détection 100 selon la figure 10 comprend généralement un système laser 101 permettant l'émission d'un premier faisceau d'excitation de pulsation $\omega_p$ (faisceau pompe) et d'un second faisceau d'excitation de pulsation $\omega_s$ (faisceau Stokes), les deux faisceaux d'excitation symbolisés par la flèche 102 étant colinéaires et incidents selon une direction principale Z dans un module de détection optique du dispositif généralement référencé 103. Le module de détection optique 103 comprend généralement des moyens 104 pour faire interagir les faisceaux d'excitation avec l'échantillon 105, positionné dans un plan XY sensiblement perpendiculaire à la direction principale Z, et des moyens d'analyse de la direction de diffusion du signal CARS résultant de l'interaction des faisceaux d'excitation avec l'échantillon 105, et plus précisément de la déviation angulaire du signal CARS, comprenant un module de détection optique 106 et une unité de traitement 125.

Le système laser 101 comprend par exemple, dans une application dite *deux couleurs,* deux sources laser 108 fines spectralement, accordables, par exemple de type Titane - Saphir, émettant entre 690 et 1000 nm, pompés par un laser de pompe 109, type Nd :YVO4 émettant à 532 nm. Les lasers accordables émettent par exemple des impulsions picoseconde (ps), typiquement de l'ordre de 3 ps, pour former les faisceaux d'excitation pompe de pulsation $\omega_p$ (de longueur d'onde typique 730 nm) et Stokes de pulsation $\omega_s$. Un sélecteur d'impulsion 110 (ou « pulse picker ») peut être utilisé pour réduire la cadence des lasers d'excitation pompe et sonde sans réduire la puissance crête des impulsions. L'utilisation d'un faisceau Stokes ou d'un faisceau pompe accordable permet notamment de balayer le spectre d'émission anti-Stokes pour des applications en spectroscopie visant à déterminer le spectre Raman du milieu résonant. D'autres sources laser accordables peuvent être utilisées, par exemple de type oscillateur paramétrique optique (OPO), amplificateur paramétrique optique (OPA), oscillateurs picoseconde de type Nd :verre, lasers fibrés dopés Ytterbium ou Erbium, etc. Les sources peuvent également être des sources lasers nanoseconde (ns) ou femtoseconde (fs), en fonction de la largeur spectrale des raies Raman que l'on veut observer. Cependant, les impulsions nanosecondes, si elles sont très bonnes d'un point de vue spectral, ont une puissance crête moins élevée que les impulsions ps et une fréquence de répétition plus basse. Par ailleurs, les effets thermiques associés aux impulsions ns sont plus à même d'endommager les échantillons biologiques. Les impulsions femtoseconde brutes sont généralement trop larges spectralement. En phase condensée (solide ou liquide), les largeurs de raie sont autour de 10-20 cm$^{-1}$, ce qui correspond à l'emploi d'impulsions picosecondes.

Dans l'exemple de la figure 10, les moyens 104 comprennent par exemple un objectif de focalisation 107 des faisceaux d'excitation visant à focaliser les faisceaux pompe et Stokes en un volume de focalisation commun pour l'analyse de l'échantillon. L'utilisation d'un objectif de focalisation est particulièrement appropriée dans les applications type microscopie. Cependant, il n'est pas indispensable pour l'émission du signal CARS de travailler en faisceaux focalisés, et notamment dans le cas de l'étude d'échantillons minces.

Dans l'exemple de la figure 10, le module de détection optique 106 comprend un objectif de collection 111 permettant de collecter le signal optique non linéaire émis, dans cet exemple le signal CARS, un filtre 112 pour couper les signaux d'excitation, un élément optique de séparation des faisceaux selon deux voies, et sur chaque voie, une lame 114, 115, type lame de rasoir, permettant de délimiter deux demi-espaces complémentaires. Dans le cas de la figure 10, les lames sont agencées pour délimiter les deux demi-espaces ($k_x$>0) et ($k_x$<0) correspondant au mode de détection X (figure 9A). Selon une variante, les lames pourraient être agencées pour délimiter deux demi-espaces ($k_y$>0) et ($k_y$<0) correspondant au mode de détection Y (figure 9B). Sur chaque voie, un détecteur 116, 117 disposé derrière la lame permet de mesurer l'intensité lumineuse dans chaque demi-espace. Le détecteur est par exemple de type photodiode à avalanche (APD), photodiode rapide (PIN), ou photomultiplicateur (PMT). Le détecteur peut être précédé d'une optique de collection 118, 119. Une unité de traitement reçoit les signaux détectés par les détecteurs 116, 117 et détermine la différence $\Delta I$ des intensités lumineuses mesurées sur chacune des voies, dont la déposante a montré qu'elle était proportionnelle au spectre Raman du milieu résonant.

Selon un exemple, les moyens 104 comprennent également un dispositif de balayage des faisceaux d'excitation dans le plan XY de l'échantillon. Ce dispositif de balayage peut être utile à la fois dans une application en spectroscopie, pour ajuster le lieu de focalisation des faisceaux d'excitation sur une interface axiale des milieux résonant et non résonant formant l'échantillon, soit dans une application d'imagerie. Il peut s'agir d'un dispositif permettant le déplacement de l'échantillon, ou de manière préférée, d'un dispositif de balayage angulaire des faisceaux d'excitation (non représenté sur la figure 10). Lorsqu'il est prévu un système de balayage angulaire des faisceaux d'excitation, les faisceaux d'excitation sont incidents selon un axe (axe optique) qui n'est plus nécessairement confondu avec la direction principale Z. Il sera alors préférable de centrer les éléments permettant de délimiter les deux demi-espaces dans la pupille de sortie de l'objectif de collection, ou une image de la pupille de sortie. En effet, le positionnement sur la pupille de sortie permet de garder les faisceaux d'excitation centrés quel que soit leur angle d'incidence sur l'échantillon.

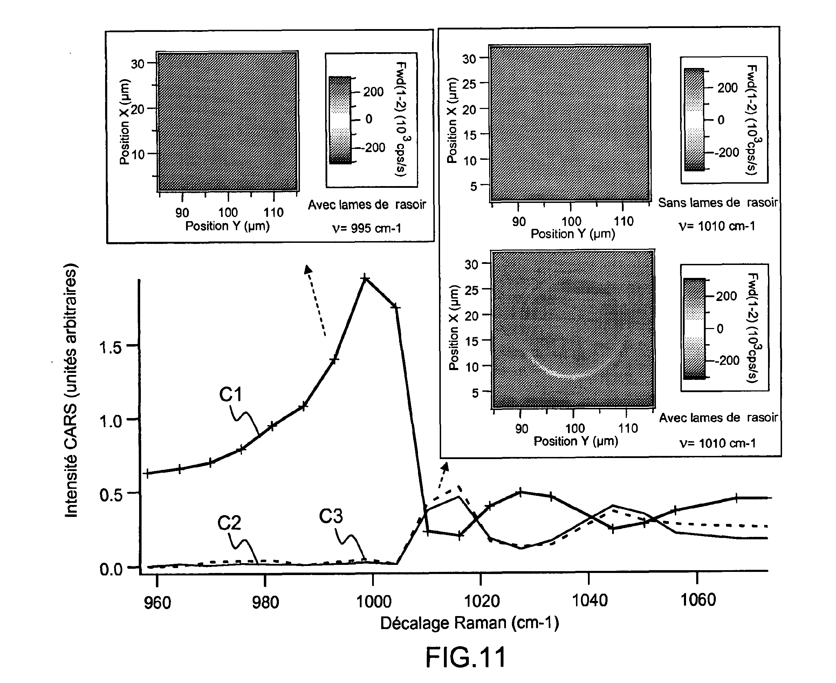

La figure 11 représente des résultats expérimentaux obtenus avec le montage expérimental de la figure 10. L'échantillon est constitué de billes de polystyrène (diamètre 20 $\mu$m), dont le cycle aromatique présente des résonances vibrationnelles situées à 1003cm$^{-1}$ et 1034cm$^{-1}$. Ces billes sont plongées dans un liquide aqueux d'indice de réfraction n=1.56 et sont excitées par un objectif d'ouverture numérique 1.2 dans l'eau. La longueur d'onde du faisceau pompe est fixée à 730 nm et on fait varier la longueur d'onde du faisceau Stokes de telle sorte à parcourir la résonance Raman susmentionnée. La courbe C1 représente l'intensité CARS, c'est-à-dire l'intensité lumineuse intégrée sur tout l'espace. La courbe C2 (en trait plein) représente la différence des intensités $\Delta I$ mesurées respectivement dans les demi-espaces ($k_x$>0) et ($k_x$<0).

Hors résonance à 995 cm$^{-1}$, la différence $\Delta I$ ne donne aucun signal. Par contre, à 1010 cm$^{-1}$ en utilisant les lames d'occultation telles que décrites dans la figure 10, les interfaces suivant la direction x s'illuminent, révélant le résultat attendu (voir la figure 8B). Si on retire les lames, aucun signal n'apparaît car les détecteurs 116, 117 (figure 10) voient le même signal. Du point de vue spectral, les courbes C2 et C3 représentent l'évolution de $\Delta I$ en fonction de $\omega_p$-$\omega_s$ à deux interfaces opposées entre la bille et le liquide. La déposante a démontré que ces courbes suivent le spectre Raman, aux erreurs d'incertitude expérimentale près.

La figure 10 montre ainsi un mode de réalisation particulièrement simple pour la mise en oeuvre de la détection Dk-CARS. De nombreuses variantes sont possibles.

Selon une variante, les lames de rasoir 115, 116 peuvent être remplacées par tout type de masque d'occultation permettant de délimiter deux demi-espaces complémentaires. Par exemple, ces masques peuvent être agencés directement sur l'élément optique de séparation 113.

Selon une autre variante, le module de détection optique 106 ne comprend qu'une seule voie, avec un détecteur unique, du type photodiode à avalanche ou photomultiplicateur, en utilisant par exemple un filtre adaptatif, par exemple un filtre à cristaux liquides commandé électriquement. Dans ce cas, on mesure dans un premier temps l'intensité intégrée sur un demi-espace, puis l'intensité mesurée sur l'autre demi-espace et on procède au calcul de la différence des intensités.

La figure 12 représente une variante de la figure 10, dans laquelle les moyens d'analyse de la direction de diffusion du signal CARS comprennent un module de détection optique 106 avec une seule voie , adaptée à la détection en mode XY (figure 9C). Selon cette variante, le système des masques d'occultation est remplacé par un détecteur unique formée d'un système d'enregistrement d'images, par exemple une caméra matricielle de type CCD, ou CMOS, ou d'une photodiode à 4 quadrants. L'utilisation de la caméra permet de détecter point à point le signal optique non linéaire émis dans des directions symétriques par rapport à la direction d'incidence des faisceaux d'excitation sur la caméra (quand on a retiré le filtre 112), la différence étant effectuée pour chaque couple de signaux ainsi détectés.

En pratique, dans une application de microscopie par exemple dans laquelle on procède au balayage des faisceaux d'excitation sur l'échantillon, la direction d'incidence des faisceaux d'excitation varie et on pourra procéder à un calibrage, par exemple en repérant la position des faisceaux d'excitation sur le détecteur, pour les différentes positions de balayage. On peut aussi réaliser le calibrage de la caméra « en solution ». Pour cela, on pourra par exemple repérer la position du signal, pour différents angles d'incidence des faisceaux d'excitation, lorsque les faisceaux d'excitation sont focalisés dans un milieu CARS homogène et qu'il n'y a donc pas de déviation du signal diffusé CARS. Le décalage sera alors mesuré par rapport à cette position de référence.

Dans le cas de l'application à la microscopie, lorsqu'on utilise un système de balayage des faisceaux d'excitation pompe et Stokes, il est préférable de positionner la caméra dans la pupille de sortie de l'objectif de collection, ou une image de la pupille de sortie. Cela permet de garder les faisceaux d'excitation centrés quelle que soit leur angle d'incidence sur l'échantillon. Sinon, on pourra procéder à un calibrage de la caméa pour tenir compte de la position des faisceaux d'excitation incidents pour les différents angles de balayage, cette position servant de repère à la mesure du décalage du signal optique non linéaire.

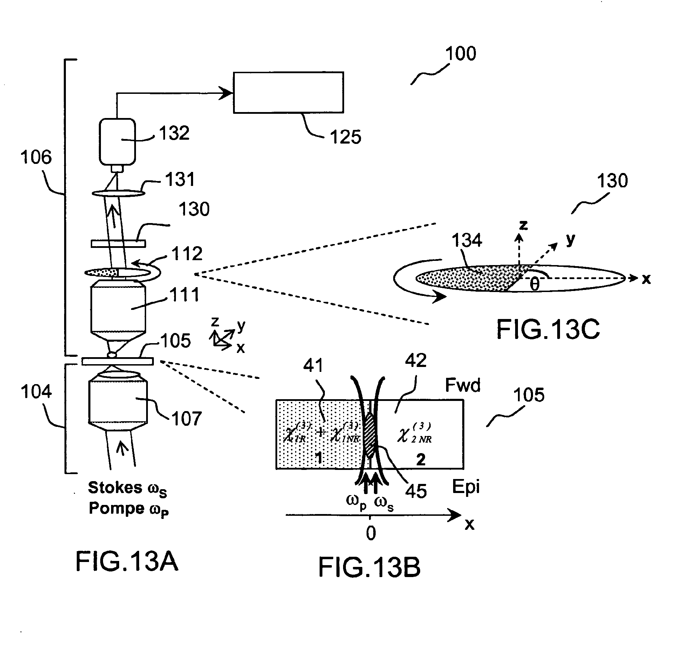

Les figures 13 à 16 illustrent une autre variante des moyens d'analyse de la direction d'émission du signal CARS. Comme dans les exemples précédents, un échantillon 105 (figure 13B) comprenant un milieu résonant et un milieu non résonant formant une interface, est excité par un faisceau de pompe et un faisceau Stokes, colinéaires, incidents sur l'échantillon selon un volume de focalisation commun 45. Dans l'exemple tel qu'illustré sur la figure 13A, le module de détection optique 106 comprend un masque en rotation 130 autour de la direction principale Z à une fréquence (ν) donnée. Ce masque, par exemple formé d'un demi-disque 134 comme cela est représenté sur la figure 13C, occulte partiellement le signal diffusé CARS dans un plan XY perpendiculaire à la direction principale Z. Le signal ainsi occulté est détecté par un détecteur 132, par exemple de type photomultiplicateur, photodiode PIN ou photodiode à avalanche, précédé par une optique de focalisation 131.

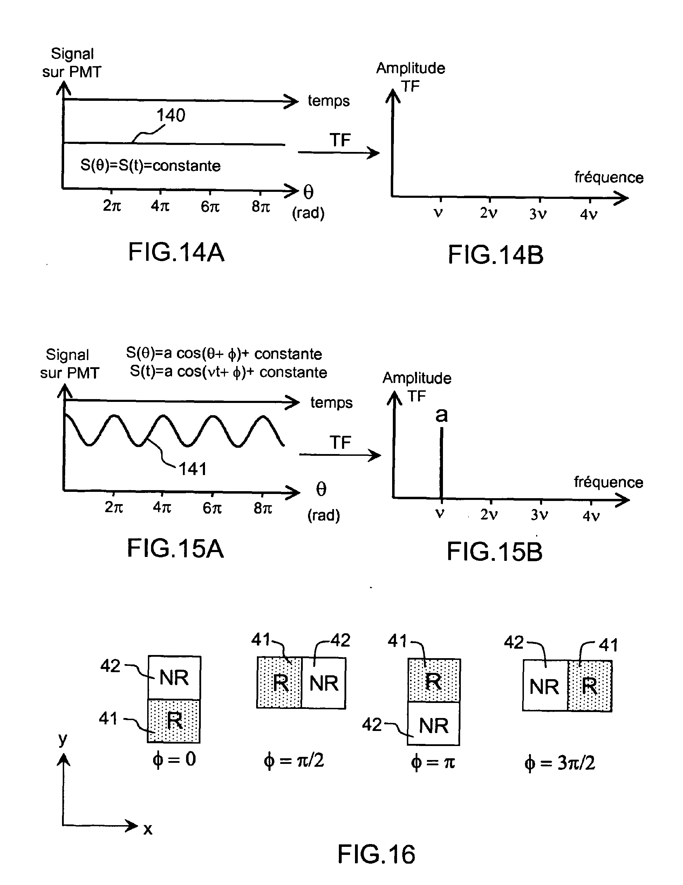

Hors résonance, le signal diffusé CARS est centré et le signal détecté par le détecteur 132 est constant en fonction de la position angulaire $\theta$ du masque ($\theta$ étant par exemple défini par rapport à l'axe x, comme cela est illustré sur la figure 13C). Comme cela apparaît sur la figure 14A, le signal détecté $S(\theta)$ est constant. Dans l'espace de Fourier, les harmoniques du signal à la fréquence $\nu$ sont nulles (Figure 14B).

A la résonance, le signal diffusé CARS est dévié, il n'est plus centrée sur le masque tournant et le signal détecté par le détecteur 132 (courbe 141, figure 15A) est donc modulé selon l'équation :

$$S(\theta) = a \cos (\theta + \phi) + \text{constante}$$

Ou

$$S(t) = a \cos (\nu t + \phi) + \text{constante}$$

L'unité de traitement 125 permet de démoduler le signal à la fréquence ν, par calcul de la transformée de Fourier, ou, avantageusement, au moyen d'une détection synchrone, afin de déterminer l'amplitude (non nulle) de la transformée de Fourier à la fréquence ν. Cette amplitude est proportionnelle à la différence entre les valeurs maximale et minimale du signal S(t). Elle est proportionnelle à la partie imaginaire $\text{Im}[\chi^{(3)}_{1R}]$ du milieu 1 ; elle est donc caractéristique d'une résonance vibrationnelle du milieu résonant et permet donc de déterminer le spectre Raman dans une application de spectroscopie, ou en microscopie, d'obtenir des images contrastées aux interfaces axiales.

Par ailleurs, comme cela est illustré sur la figure 16, la détermination de la phase $\phi$ du signal modulé à la première harmonique v, obtenue par transformée de Fourier, permet de renseigner sur l'orientation et la position relative des milieux résonant et non résonant.

On pourra utiliser pour le masque tournant d'autres formes qu'un demi-disque, comme par exemple un quart de disque ou trois quart de disque. Par ailleurs, le masque tournant peut être réalisé mécaniquement, comme cela a été décrit, ou au moyen d'un filtre commandable électriquement, par exemple un filtre à cristaux liquides.

La figure 13A montre l'application de la méthode à la microscopie, lorsqu'on utilise un système de balayage des faisceaux d'excitation pompe et Stokes. Dans cet exemple il est préférable de positionner le disque tournant dans la pupille de sortie de l'objectif de collection, ou une image de la pupille de sortie. , afin de garder les faisceaux d'excitation centrés quelle que soit leur angle d'incidence sur l'échantillon.

Pour la mise en oeuvre de Dk-CARS, l'analyse de la direction de diffusion du signal CARS est faite en champ lointain. L'utilisation de l'objectif de collection 111 (figure 10, 12, 13A) facilite la mise en oeuvre expérimentale. Cependant cet objectif de collection n'est pas strictement nécessaire et la détection pourrait se faire directement après l'échantillon

La détection Dk-CARS a été décrite dans une application *deux couleurs,* utilisant deux sources laser fines spectralement. Dans une application dite *multiplexe,* on pourra choisir une source d'émission du faisceau Stokes large spectralement, générée par exemple par une impulsion femtoseconde ou par un supercontinuum généré par une fibre optique ou un autre milieu dispersif. Le signal pompe reste lui fin spectralement. Dans cette application, il sera possible d'acquérir un spectre Raman en une seule impulsion, par exemple en utilisant deux spectromètres à fente ou un spectromètre unique équipé d'une caméra CCD dans lequel on injecte les deux signaux détectés dans les deux demi-espaces. Dans cette application, il s'agit d'acquérir les spectres dans les demi-espaces ($k_x > 0$) et ($k_x < 0$) et de faire leur différence.

Dans une application dite *trois couleurs,* on utilise trois longueurs d'ondes de pulsations associées $\omega_1$, $\omega_2$ et $\omega_3$ pour générer un signal CARS à la pulsation $\omega_1 - \omega_2 + \omega_3$. Le signal CARS peut être rendu sans bruit non résonant en détectant les signaux à la pulsation $\omega_1 - \omega_2 + \omega_3$ dans les demi-espaces ($k_x > 0$) et ($k_x < 0$) et en faisant leur différence.

Bien que la méthode de détection ait été décrite dans le cas de la diffusion CARS, elle s'applique aussi bien à d'autres processus non linéaires, du 2ème ou du 3ème ordre, à la fois pour des applications de spectroscopie ou pour des applications de microscopie par détection aux interfaces axiales, permettant ainsi de révéler des interfaces entre milieu résonant et non résonant. Dans chaque cas, on procède à une analyse de la direction d'émission du signal optique non linéaire résultant de l'interaction d'un ou plusieurs faisceaux d'excitation avec un échantillon présentant une interface entre un milieu résonant et un milieu non résonant. Cette analyse de la direction d'émission permet soit de révéler l'interface entre le milieu résonant et le milieu non résonant, soit de caractériser un spectre du milieu résonant.

Selon un exemple, on peut utiliser un processus de génération de troisième harmonique résonant dans lequel la résonance est une résonance électronique, en excitant avec un faisceau d'excitation pompe unique, de pulsation $\omega_p$, un échantillon comprenant une interface entre un milieu résonant et un milieu non-résonant. Par exemple on utilise une source laser picoseconde ou femtoseconde de type oscillateurs Ti : Saphir, Nd :verre, lasers fibrés dopés Ytterbium ou Erbium.

Selon un autre exemple, on peut utiliser un processus de mélange à quatre ondes résonant dans lequel la résonance est une résonance électronique, en excitant avec un faisceau d'excitation pompe unique, de pulsation $\omega_p$, un échantillon comprenant une interface entre un milieu résonant et un milieu non-résonant. Par exemple on utilise une source laser picoseconde ou femtoseconde de type oscillateurs Ti : Saphir, Nd :verre, lasers fibrés dopés Ytterbium ou Erbium.

Les deux exemples décrits précédemment traitent de résonances électroniques. On les trouve dans des atomes, de molécules, des cristaux semi-conducteurs, etc.

Selon un autre exemple, on pourra exciter la seconde harmonique résonante avec un faisceau pompe unique, ou on pourra faire de la somme de fréquence avec un faisceau pompe et un faisceau sonde (effet non linéaire du 2ème ordre).

Bien que décrite à travers un certain nombre d'exemples de réalisation détaillés, le dispositif de détection et la méthode selon l'invention comprend différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

**Revendications**

**1.** Dispositif (100) pour la détection d'un signal optique non linéaire résonant induit dans un échantillon (105) de type comprenant un milieu résonant (41) et un milieu non résonant (42) formant une interface (43), le dispositif comprenant :

- une source d'émission (101) d'au moins un premier faisceau lumineux d'excitation, dit faisceau pompe, à une première pulsation $\omega_p$ donnée, adapté à l'excitation du milieu résonant d'un échantillon du type donné, **caractérisé par** :
- un module de détection optique (106) adapté à la détection d'un signal optique non linéaire résultant de l'interaction dudit faisceau pompe avec une interface axiale entre les milieux résonant et non résonant de l'échantillon, dans au moins deux directions symétriques ($\overline{k, k'}$) par rapport à l'axe optique dudit faisceau pompe incident dans l'échantillon, et
- une unité de traitement (125) adaptée au traitement des signaux ($I^{Fwd}(\overline{k})$, $I^{Fwd}(\overline{k'})$) ainsi détectés permettant d'obtenir la différence desdits signaux, le signal de différence résultant étant caractéristique d'une résonance vibrationnelle ou électronique du milieu résonant de l'échantillon.

2. Dispositif selon la revendication 1, dans lequel la source d'émission (101) permet l'émission d'au moins un deuxième faisceau d'excitation du milieu résonant à au moins une deuxième pulsation $\omega_s$ différente de la première pulsation $\omega_p$, les faisceaux d'excitation étant colinéaires.

3. Dispositif selon la revendication 2, dans lequel la source d'émission permet l'émission d'un faisceau pompe de pulsation $\omega_p$ et d'un faisceau Stokes de pulsation $\omega_s$, permettant de générer dans l'échantillon un signal non linéaire dit signal diffusé CARS, de pulsation $\omega_{as} = 2\omega_p - \omega_s$, ledit signal de différence obtenu étant caractéristique d'une émission Raman du milieu résonant.

4. Dispositif selon l'une des revendications précédentes, comprenant un objectif de focalisation (107) du ou desdits faisceaux d'excitation en un volume de focalisation commun (45), pour intercepter une interface entre le milieu résonant et le milieu non résonant de l'échantillon.

5. Dispositif selon l'une des revendications précédentes, dans lequel le module de détection optique (106) comprend au moins un masque d'occultation et au moins un détecteur, permettant de détecter le signal optique non linéaire intégré dans deux demi-espaces complémentaires, symétriques par rapport à l'axe optique, la différence étant effectuée sur les signaux intégrés dans les deux demi-espaces.

6. Dispositif selon la revendication 5, dans lequel le module de détection optique (106) comprend

- un élément optique de séparation (113) du signal optique non linéaire collecté selon une première et une deuxième voie, et
- sur chaque voie, un masque d'occultation (114, 115) du signal optique non linéaire et un détecteur (116, 117), les signaux sur chacune des voies étant occultés respectivement selon les deux demi-espaces.

7. Dispositif selon l'une des revendications 1 à 4, dans lequel le module de détection optique (106) comprend un système d'enregistrement d'images (120) permettant de détecter point à point le signal optique non linéaire collecté dans des directions symétriques par rapport à l'axe optique, la différence étant effectuée pour chaque couple de signaux ainsi détectés.

8. Dispositif selon l'une des revendications 1 à 4, dans lequel :

- le module de détection optique (106) dudit signal optique non linéaire comprend un masque (130) en rotation autour de l'axe optique à une fréquence (v) donnée, le masque occultant partiellement ledit signal, et un détecteur permettant de détecter le signal optique intégré dans la partie de l'espace non occultée par le masque pour délivrer un signal modulé à ladite fréquence de rotation du masque et présentant une valeur maximale et une valeur minimale, et
- l'unité de traitement (125) permet le traitement dudit signal modulé afin d'obtenir l'amplitude de la composante fréquentielle du signal à ladite fréquence de rotation du masque, l'amplitude étant proportionnelle à la différence entre lesdites valeurs maximale et minimale et étant caractéristique d'une résonance vibrationnelle ou électronique du milieu résonant.

9. Dispositif selon la revendication 8, dans lequel l'unité de traitement permet d'obtenir en outre la phase de la composante fréquentielle du signal détecté modulé, la phase étant caractéristique de la position relative des milieux résonant et non résonant.

10. Dispositif selon l'une des revendications 8 ou 9, dans lequel le masque comprend un demi-disque (134) en rotation autour de l'axe optique.

**11.** Dispositif selon l'une quelconque des revendications précédentes, comprenant en outre un dispositif de balayage angulaire du ou des faisceaux d'excitation, permettant au ou à les faisceaux d'excitation d'intercepter un échantillon du type donné à différentes positions de l'interface entre le milieu résonant et le milieu non résonant.

**12.** Dispositif selon l'une des revendications précédentes, dans lequel la source d'émission émet au moins un faisceau d'excitation à longueur d'onde variable, permettant d'obtenir un spectre des résonances vibrationnelles ou électroniques du milieu résonant d'un échantillon du type donné.

**13.** Méthode pour la détection d'un signal optique non linéaire résonant induit dans un échantillon (105), l'échantillon comprenant un milieu résonant (41) et un milieu non résonant (42) formant une interface (43), la méthode comprenant :

- l'émission d'au moins un premier faisceau lumineux d'excitation du milieu résonant, dit faisceau pompe, à une première pulsation $\omega_p$ donnée, ledit faisceau pompe étant incident sur l'échantillon selon un axe optique, et interceptant ladite interface entre le milieu résonant et le milieu non résonant, **caractérisé par** :
- la détection du signal optique non linéaire résultant de l'interaction du ou desdits faisceaux d'excitation avec une interface axiale entre les milieux résonant et non résonant de l'échantillon, dans au moins deux directions symétriques ($\overline{k}$, $\overline{k}'$) par rapport à l'axe optique, et
- le traitement des signaux ainsi détectés ($I^{Fwd}(\overline{k})$, $I^{Fwd}(\overline{k}')$) permettant d'obtenir la différence desdits signaux, le signal de différence résultant étant caractéristique d'une résonance vibrationnelle ou électronique du milieu résonant de l'échantillon.

**14.** Méthode selon la revendication 13, comprenant l'émission d'au moins un deuxième faisceau d'excitation du milieu résonant à au moins une deuxième pulsation $\omega_s$ différente de la première pulsation $\omega_p$, les faisceaux d'excitation étant colinéaires.

**15.** Méthode selon la revendication 14, comprenant l'émission d'un faisceau pompe de pulsation $\omega_p$ et d'un faisceau Stokes de pulsation $\omega_s$, le signal optique non linéaire résultant de l'interaction desdits faisceaux pompe et Stokes étant un signal dit signal diffusé CARS, de pulsation $\omega_{as} = 2\omega_p - \omega_s$ et le signal de différence étant caractéristique d'une émission Raman du milieu résonant.

**16.** Méthode selon l'une des revendications 13 à 15, dans laquelle le ou lesdits faisceaux d'excitation sont focalisés en un volume de focalisation commun (45), permettant d'intercepter ladite interface entre le milieu résonant et le milieu non résonant.

**17.** Méthode selon l'une des revendications 13 à 16, dans laquelle la détection du signal optique non linéaire est faite par intégration du signal dans deux demi-espaces complémentaires, symétriques par rapport à l'axe optique, et le traitement comprend le calcul de la différence entre les signaux intégrés dans les deux demi-espaces.

**18.** Méthode selon l'une des revendications 13 à 16, dans laquelle la détection du signal optique non linéaire est faite par détection point à point du signal optique non linéaire dans des directions symétriques par rapport à l'axe optique, et le traitement comprend le calcul de la différence entre les signaux de chaque couple de signaux ainsi détectés.

**19.** Méthode selon l'une des revendications 13 à 16, dans laquelle:

- La détection du signal optique non linéaire comprend l'occultation partielle dudit signal optique non linéaire au moyen d'un masque (130) en rotation autour de l'axe optique à une fréquence (v) donnée et la détection du signal optique intégré dans la partie de l'espace non occultée par le masque pour délivrer un signal modulé à ladite fréquence de rotation du masque présentant une valeur maximale et une valeur minimale,
- Le traitement comprend la détermination de l'amplitude de la composante fréquentielle à ladite fréquence de rotation du masque dudit signal modulé, l'amplitude étant proportionnelle à la différence entre lesdites valeurs maximale et minimale du signal modulé et étant caractéristique d'une résonance vibrationnelle ou électronique du milieu résonant.

**20.** Méthode selon la revendication 19, comprenant en outre la détermination de la phase de la composante fréquentielle du signal détecté modulé, la phase étant caractéristique de la position relative des milieux résonant et non résonant.

**21.** Méthode selon l'une des revendications 13 à 20, dans laquelle le ou les faisceaux d'excitation subissent un balayage angulaire pour intercepter l'échantillon à différentes positions de l'interface entre le milieu résonant et non résonant.

**22.** Méthode selon l'une des revendications 13 à 21, dans laquelle l'un au moins des faisceaux d'excitation présente une longueur d'onde d'émission variable, permettant d'obtenir un spectre des résonances vibrationnelles ou électroniques du milieu résonant.

**Patentansprüche**

**1.** Vorrichtung (100) zur Detektion eines resonanten nichtlinearen optischen Signals, das in einem Probestück (105) induziert wird, welches derart beschaffen ist, dass es ein resonantes Medium (41) und ein nicht resonantes Medium (42) umfasst, die eine Grenzschicht (43) bilden, wobei die Vorrichtung Folgendes umfasst:

- eine Quelle (101) zur Aussendung mindestens eines ersten Anregungslichtstrahls bei einer ersten gegebenen Kreisfrequenz $\omega_p$, der als Pumpstrahl bezeichnet wird und dafür geeignet ist, das resonante Medium eines Probestücks einer gegebenen Art anzuregen, **gekennzeichnet durch**:
- ein optisches Detektionsmodul (106), das zur Detektion eines nichtlinearen optischen Signals geeignet ist, welches sich aus der Wechselwirkung des Pumpstrahls mit einer axialen Grenzschicht zwischen dem resonanten und dem nicht resonanten Medium des Probestücks ergibt, in mindestens zwei Richtungen $(\vec{k}, \vec{k'})$, die unter Bezugnahme auf die optische Achse des Pumpstrahls, welcher innerhalb des Probestücks einfällt, symmetrisch sind, und

- eine Verarbeitungseinheit (125), die zur Verarbeitung der auf diese Weise detektierten Signale $(I^{Fwd}(\vec{k}), (I^{Fwd}(\vec{k'}))$ geeignet ist und es ermöglicht, die Differenz dieser Signale zu bestimmen, wobei das resultierende Differenzsignal für eine mechanische oder elektronische Resonanz des resonanten Mediums des Probestücks kennzeichnend ist.

**2.** Vorrichtung nach Anspruch 1, wobei es die Emissionsquelle (101) ermöglicht, mindestens einen zweiten Strahl zur Anregung des resonanten Mediums bei mindestens einer zweiten Kreisfrequenz $\omega s$ aussendet, welche von der ersten Kreisfrequenz $\omega p$ verschieden ist, wobei die Anregungsstrahlen kollinear sind.

**3.** Vorrichtung nach Anspruch 2, wobei es die Emissionsquelle ermöglicht, eine Pumpstrahl mit der Kreisfrequenz $\omega p$ und einen Stokes-Strahl mit der Kreisfrequenz $\omega s$ auszusenden, sodass in dem Probestück ein nichtlineares Signal erzeugt werden kann, das als gestreute CARS-Signal bezeichnet wird und die Kreisfrequenz $\omega as = 2\omega p - \omega s$ aufweist, wobei das erhaltene Differenzsignal kennzeichnend für eine Raman-Emission des resonanten Mediums ist.

**4.** Vorrichtung nach einem der vorhergehenden Ansprüche, wobei sie ein Objektiv (107) zur Fokussierung des oder der Anregungsstrahlen innerhalb eines gemeinsamen Fokussierungsvolumens (45) umfasst, um eine Grenzschicht zwischen dem resonanten Medium und dem nicht resonanten Medium des Probestücks zu treffen.

**5.** Vorrichtung nach einem der vorhergehenden Ansprüche, wobei das optische Detektionsmodul (106) mindestens eine Ausblendmaske und mindestens einen Detektor umfasst, mittels derer das nichtlineare optische Signal nach seiner Integration innerhalb zweier komplementärer Halbräume detektiert werden kann, welche unter Bezugnahme auf die optische Achse symmetrisch sind, wobei die Differenz ausgehend von den Signalen gebildet wird, die innerhalb der beiden Halbräumen integriert wurden.

**6.** Vorrichtung nach Anspruch 5, wobei das optische Detektionsmodul (106) Folgendes umfasst

- ein optisches Element (113) zur Auftrennung des erfassten nichtlinearen optischen Signals in einen ersten und einen zweiten Weg, und
- in jedem der Wege eine Maske (114, 115) zum Ausblenden des nichtlinearen optischen Signals und einen Detektor (116, 117), wobei die Signale auf jedem der Wege den beiden Halbräumen entsprechend ausgeblendet werden.

**7.** Vorrichtung nach einem der Ansprüche 1 bis 4, wobei das optische Detektionsmodul (106) ein Bildaufzeichnungssystem (120) umfasst, mittels dessen das nichtlineare optische Signal, welches in Richtungen, die unter Bezugnahme auf die optische Achse symmetrisch sind, erfasst wird Punkt für Punkt detektiert werden kann, wobei die Differenz für jedes Paar von diese Weise detektierten Signalen gebildet wird.

8. Vorrichtung nach einem der Ansprüche 1 bis 4, wobei:

- das Modul (106) zur optischen Detektion des nichtlinearen optischen Signals eine Maske (130) umfasst, die mit einer gegebenen Frequenz (ν) um die optische Achse rotiert, wobei die Maske das Signal teilweise ausblendet, sowie einen Detektor, der das innerhalb des Bereiches des Raumes, der nicht von der Maske ausgeblendet wird, integrierte optische Signal detektieren kann, um ein Signal abzugeben, welches mit der Rotationsfrequenz der Maske moduliert ist sowie einen Maximalwert und einen Minimalwert aufweist, und
- es die Verarbeitungseinheit (125) ermöglicht, dieses modulierte Signal zu verarbeiten, um die Amplitude der Frequenzkomponente des Signal bei der Rotationsfrequenz der Maske zu erhalten, wobei die Amplitude proportional zur Differenz zwischen den Maximal- und Minimalwerten ist und wobei sie kennzeichnend für eine mechanische oder elektronische Resonanz des resonanten Mediums ist.

9. Vorrichtung nach Anspruch 8, wobei es die Verarbeitungseinheit ermöglicht, darüber hinaus die Phase der Frequenzkomponente des detektierten modulierten Signals zu erhalten, wobei die Phase kennzeichnend für die relative Position der resonanten und nicht resonanten Medien ist.

10. Vorrichtung nach einem der Ansprüche 8 oder 9, wobei die Maske eine Halbscheibe (134) umfasst, die um die optische Achse rotiert.

11. Vorrichtung nach einem beliebigen der vorhergehenden Ansprüche, wobei sie darüber hinaus eine Vorrichtung zur kontinuierlichen Winkelveränderung des oder der Anregungsstrahlen umfasst, sodass der oder die Anregungsstrahlen ein Probestück der gegebenen Art an verschiedenen Positionen der Grenzschicht zwischen dem resonanten Medium und dem nicht resonanten Medium treffen können.

12. Vorrichtung nach einem der vorhergehenden Ansprüche, wobei die Emmisionsquelle mindestens einen Anregungsstrahl mit variabler Wellenlänge aussendet, sodass ein Spektrum der mechanischen oder elektronischen Resonanzen des resonanten Mediums eines Probestücks der gegebenen Art erhalten werden kann.

13. Verfahren zur Detektion eines resonanten nichtlinearen optischen Signals, das in einem Probestück (105) induziert wird, wobei das Probestück ein resonantes Medium (41) und ein nicht resonantes Medium (42) umfasst, die eine Grenzschicht (43) bilden, wobei das Verfahren Folgendes umfasst:

- Aussenden mindestens eines ersten Lichtstrahls zur Anregung des resonanten Mediums, mit einer ersten gegebenen Kreisfrequenz $\omega_p$, der als Pumpstrahl bezeichnet wird, wobei der Pumpstrahl gemäß einer optischen Achse auf das Probestück einfällt und die Grenzschicht zwischen dem resonanten Medium und dem nicht resonanten Medium trifft, **gekennzeichnet durch**
- die Detektion des nichtlinearen optischen Signals, welches sich aus der Wechselwirkung des oder der Anregungsstrahls/Arregungsstrahlen mit einer axialen Grenzschicht zwischen dem resonanten und dem nicht resonanten Medium des Probestücks ergibt, in mindestens zwei Richtungen $\left(\overrightarrow{k}, \overrightarrow{k'}\right)$, die unter Bezugnahme auf die optische Achse symmetrisch sind, und

- die Verarbeitung der auf diese Weise detektierten Signale $\left(I^{\mathrm{Fwd}}(\overrightarrow{k}), (I^{\mathrm{Fwd}}(\overrightarrow{k'})\right)$, wodurch es ermöglicht wird, die Differenz dieser Signale zu bestimmen, wobei das resultierende Differenzsignal für eine mechanische oder elektronische Resonanz des Mediums des Probestücks kennzeichnend ist.

14. Verfahren nach Anspruch 13, welches das Aussenden mindestens eines zweiten Strahls zur Anregung des resonanten Mediums mit einer zweiten Kreisfrequenz $\omega_s$ umfasst, welche von der ersten Kreisfrequenz $\omega_p$ verschieden ist, wobei die Anregungsstrahlen kollinear sind.

15. Verfahren nach Anspruch 14, welches das Aussenden eines Pumpstrahls mit der Kreisfrequenz $\omega_p$ und eines Stokes-Strahls mit der Kreisfrequenz $\omega_s$ umfasst, wobei es sich bei dem nichtlinearen optischen Signal, welches sich aus der Wechselwirkung der Pump- und Stokes-Strahlen ergibt, um ein Signal handelt, das als gestreutes CARS-Signal bezeichnet wird und die Kreisfrequenz ωas = 2ωp - ωs aufweist, und das Differenzsignal für eine Raman-Emission des resonanten Mediums kennzeichnend ist.

16. Verfahren nach einem der Ansprüche 13 bis 15, wobei der oder die Anregungsstrahlen in einem gemeinsamen Fokussierungsvolumen (45) derart fokussiert werden, dass die Grenzschicht zwischen dem resonanten Medium und dem resonanten Medium getroffen werden kann.

17. Verfahren nach einem der Ansprüche 13 bis 16, wobei die Detektion des nichtlinearen optischen Signals dadurch erfolgt, dass das Signal innerhalb zweier komplementärer Halbräume integriert wird, die unter Bezugnahme auf die optische Achse symmetrisch sind, und die Verarbeitung das Berechnen der Differenz zwischen den Signalen, die innerhalb der beiden Halbräumen integriert wurden, umfasst.

18. Verfahren nach einem der Ansprüche 13 bis 16, wobei die Detektion des nichtlinearen optischen Signals dadurch erfolgt, dass das nichtlineare optische Signal in Richtungen, die unter Bezugnahme auf die optische Achse symmetrisch sind, Punkt für Punkt detektiert wird, und die Verarbeitung das Berechnen der Differenz zwischen den Signalen jedes Paares von auf diese Weise detektierten Signalen umfasst.

19. Verfahren nach einem der Ansprüche 13 bis 16, wobei:

   - die Detektion des nichtlinearen optischen Signals das teilweise Ausblenden des nichtlinearen optischen Signals mit Hilfe einer Maske (130) umfasst, welche mit einer gegebenen Frequenz (ν) um die optische Achse rotiert, sowie die Detektion des optischen Signals, welches innerhalb des Bereiches des Raumes integriert wurde, der nicht von der Maske ausgeblendet wird, um ein Signal abzugeben, das mit der Rotationsfrequenz der Maske moduliert ist sowie einen Maximalwert und einen Minimalwert aufweist,
   - die Verarbeitung die Bestimmung der Amplitude der Frequenzkomponente mit der Rotationsfrequenz der Maske des vorgenannten modulierten Signals umfasst, wobei die Amplitude proportional zur Differenz zwischen den Maximal- und Minimalwerten des modulierten Signals ist und wobei sie kennzeichnend für eine mechanische oder elektronische Resonanz des resonanten Mediums ist.

20. Verfahren nach Anspruch 19, wobei es darüber hinaus die Bestimmung der Phase der Frequenzkomponente des detektierten modulierten Signals umfasst, wobei die Phase kennzeichnend für die relative Position der resonanten und nicht resonanten Medien ist.

21. Verfahren nach einem der Ansprüche 13 bis 20, wobei der oder die Anregungsstrahlen eine kontinuierliche Winkelveränderung erfahren, um das Probestück an verschiedenen Positionen der Grenzschicht zwischen dem resonanten und dem nicht resonanten Medium zu treffen.

22. Verfahren nach einem der Ansprüche 13 bis 21, wobei mindestens einer der Anregungsstrahlen eine variable Aussendungswellenlänge aufweist, sodass ein Spektrum der mechanischen oder elektronischen Resonanzen des resonanten Mediums erhalten werden kann.

**Claims**

1. Device (100) for detecting a resonant nonlinear optical signal induced in a sample (105) of a type comprising a resonant medium (41) and a non-resonant medium (42) forming an interface (43), the device comprising:

   - an emission source (101) of at least one first excitation light beam, called a pump beam, at a first given angular frequency $\omega_p$ for the excitation of a resonant medium of a sample of the given type, **characterized by**:
   - an optical detection module (106) for detecting a nonlinear optical signal resulting from the interaction of said pump beam with an axial interface between the resonant and non-resonant media of the sample, in at least two symmetrical directions $(\overline{k}, \overline{k}')$ about the optical axis of said incident pump beam incident in the sample, and
   - a processing unit (125) for processing the signals ($^{IFwd}(\overline{k})$, $^{IFwd}(\overline{k}')$) thus detected, allowing the difference in detected signals to be obtained, the resulting difference signal being characteristic of a vibrational or electronic resonance of the resonant medium

2. Device according to claim 1, in which the emission source (101) allows the emission of at least a second excitation beam for excitation of the resonant medium, at at least a second angular frequency ωs different from the first angular frequency ωp, the excitation beams being collinear.

3. Device according to claim 2, in which the emission source allows the emission of a pump beam of angular frequency ωp and a Stokes beam of angular frequency ωs, allowing a nonlinear signal called CARS scattered signal to be generated in the sample, of angular frequency ωas = 2ωp - ωs, said obtained signal difference being characteristic of a Raman emission of the resonant medium.

4. Device according to any one of the previous claims, comprising a focusing lens (107) for focusing said excitation beam or beams in a common focal volume (45), to intercept an interface between the resonant medium and the non-resonant medium of the sample.

5. Device according to any one of the preceding claims, in which the optical detection module (106) comprises at least one shadow mask and at least one detector, enabling detection of the non-linear optical signal integrated into two complementary half-spaces, symmetrical about the optical axis, the difference being taken of the signals integrated into the two half-spaces.

6. Device according to claim 5, in which the optical detection module (106) comprises

- an optical splitting element (113) for separating the collected nonlinear optical signal in a first and second path, and
- on each path, a shadow mask (114, 115) for occulting the nonlinear optical signal and a detector (116, 117), the signals in each path being occulted respectively according to the two half-spaces.

7. Device according to any one of claims 1 to 4, in which the optical detection module (106) comprises an image recording system (120) allowing point-by-point detection of the nonlinear optical signal collected in directions symmetrical about the optical axis, the difference being taken of each signal couple thus detected.

8. Device according to any claims 1 to 4, in which:

- the optical detection module (106) of said nonlinear optical signal comprises a mask (130) in rotation about the optical axis at a given frequency (v), the mask partially occulting said signal, and a detector allowing detection of the optical signal integrated into the part of the space not occulted by the mask to deliver a signal modulated at said rotation frequency of the mask and having a maximum value and a minimum value, and
- the processing unit (125) allows the processing of said modulated signal in order to obtain the amplitude of the frequency component of the signal at said rotation frequency of the mask, the amplitude being proportional to the difference between said maximum and minimum values and being characteristic of a vibrational or electronic resonance of the resonant medium.

9. Device according to claim 8, in which the processing unit also allows the phase of the frequency component of the modulated detected signal to be obtained, the phase being characteristic of the relative position of the resonant and non-resonant media.

10. Device according to any one of claims 8 or 9, in which the mask comprises a half-disc (134) rotating about the optical axis.

11. Device according to any one of the preceding claims, also comprising a device for angular scanning of the excitation beam or beams, allowing the excitation beam or beams to intercept a sample of the given type at different positions of the interface between the resonant medium and the non-resonant medium.

12. Device according to any one of the preceding claims, in which the emission source emits at least one variable wavelength excitation beam, allowing a spectrum of vibrational or electronic resonances of the resonant medium of a sample of the given type to be obtained.

13. Method for detecting a resonant non-linear optical signal induced in a sample (105), the sample comprising a resonant medium (41) and a non-resonant medium (42) forming an interface (43), the method comprising:

- the emission of at least one first excitation light beam of the resonant medium, called a pump beam, at a first

given angular frequency $\omega_p$, said pump beam being incident on the sample along an optical axis, and intercepting said interface between the resonant medium and the non-resonant medium, **characterized by**:

- the detection of the nonlinear optical signal resulting from the interaction of said beam or beams with an axial interface between the resonant and non-resonant media of the sample, in at least two symmetrical directions $(\overline{k}, \overline{k}')$ about the optical axis, and

- the processing of signals ($I^{FWd}(\overline{k})$, $I^{FWd}(\overline{k}')$) thus detected, allowing the difference between said signals to be obtained, the resulting difference signal being characteristic of a vibrational or electronic resonance of the resonant medium of the sample.

14. Method according to claim 13, comprising the emission of at least one second excitation beam of the resonant medium, at at least one second angular frequency $\omega s$ different from the first angular frequency $\omega p$, the excitation beams being collinear.

15. Method according to claim 14, comprising the emission of a pump beam of angular frequency $\omega p$ and a Stokes beam of angular frequency $\omega s$, the nonlinear optical signal resulting from the interaction of said pump and Stokes beams being a signal called a CARS scattered signal, of angular frequency $\omega as = 2\omega p - \omega s$ and the difference signal being characteristic of a Raman emission of the resonant medium.

16. Method according to any one of claims 13 to 15, in which the said excitation beam or beams are focused into a common focal volume (45), allowing said interface to be intercepted between the resonant medium and non-resonant medium.

17. Method according to any one of claims 13 to 16, in which the detection of the nonlinear optical signal is achieved by integration of the signal into two complementary half-spaces, symmetrical about the optical axis, and the processing comprises calculation of the difference between the signals integrated into the two half-spaces.

18. Method according to any one of claims 13 to 16, in which the detection of the nonlinear optical signal is achieved by point-by-point detection of the nonlinear optical signal in directions symmetrical about the optical axis, and the processing comprises calculating the difference between the signals of each signal couple thus detected.

19. Method according to any of claims 13 to 16, in which:

- the detection of the nonlinear optical signal comprises the partial occulting of said nonlinear optical signal by means of a mask (130) rotating about the optical axis at a given frequency (v), and detection of the optical signal integrated into the part of the space not occulted by the mask to deliver a modulated signal at said rotation frequency of the mask having a maximum and minimum value,

- the processing comprises determining the amplitude of the frequency component at said rotation frequency of the mask of said modulated signal, the amplitude being proportional to the difference between said maximum and minimum values of the modulated signal and being characteristic of a vibrational or electronic resonance of the resonant medium.

20. Method according to claim 19, also comprising determination of the phase of the frequency component of the modulated detected signal, the phase being characteristic of the relative position of the resonant and non-resonant media.

21. Method according to any one of claims 13 to 20, in which the excitation beam or beams are subject to angular scanning to intercept the sample at various positions of the interface between the resonant and non-resonant medium.

22. Method according to any one of claims 13 to 21, in which at least one of the excitation beams has a variable emission wavelength, allowing a spectrum of the vibrational or electronic resonances of the resonant medium to be obtained.

FIG.1A    FIG.1B

FIG.2A    FIG.2B

FIG.3A    FIG.3B

$I^{Fwd}(\vec{k})$    $I^{Fwd}(\vec{k'})$

44    45 Fwd

41

$\chi^{(3)}_{1R} + \chi^{(3)}_{1NR}$    $\chi^{(3)}_{2NR}$    42

1    2

43    Epi

$\omega_p$    $\omega_s$

0    x

## FIG.4

61    62    φ = 0    φ ≠ 0

A    $E_1 exp(i\varphi)$    x    x    x

M(x)

a/2

z

a/2

B    $E_2$    M'(-x)

D

## FIG.6

● **Décalage** angulaire $\Delta k_x$
—— Phase de $\chi_1^{(3)}$

0.30
0.25
0.20
0.15
0.10
0.05
0.00

0.8
0.6
0.4
0.2
0.0

-10  -5   0    5   10

Décalage résonance Raman ζ

Décalage angulaire ($\Delta k_x$)

Phase (rad.)

## FIG.7

FIG.5

**FIG.8A**

**FIG.8B**

FIG.9A

FIG.9B

FIG.9C

FIG.10

FIG.12

FIG.11

FIG.13A

FIG.13B

FIG.13C

FIG.14A

FIG.14B

FIG.15A

FIG.15B

FIG.16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6809814 B
- WO 2005124322 A
- WO 2008135257 A
- US 7352458 B
- US 6789507 B

**Littérature non-brevet citée dans la description**

- **R.W. BOYD.** Nonlinear Optics. Academic Press, 1992
- **M. MULLER ; J. SCHINS.** Imaging the thermodynamic state of lipidic membranes with multiplex CARS spectroscopy. *Physical Chimistry B,* 2007, vol. 106, 3715-3723
- **GACHET et al.** Coherent anti-Stokes Raman scattering (CARS) microscopy imaging at interfaces: evidence of interference effects. *Optics Express,* 06 Août 2007, vol. 15 (16), 10408-10420